# EUROPEAN PATENT APPLICATION

(11) **EP 4 394 970 A1**
(43) Date of publication of application: **03.07.2024**
(21) Application number: 22900186.2
(22) Date of filing: 03.11.2022
(51) Int. Cl.: H01M 10/052

(54) **SECONDARY BATTERY AND ELECTRICAL DEVICE COMPRISING SAME**

(30) Priority: 02.12.2021 CN 202111460178
(71) Applicant: Contemporary Amperex Technology Co., Limited, Ningde, Fujian 352100 (CN)
(72) Inventor: XU, Ningbo, Ningde, Fujian 352100 (CN); ZOU, Hailin, Ningde, Fujian 352100 (CN); CHEN, Peipei, Ningde, Fujian 352100 (CN)
(74) Representative: Kraus & Lederer PartGmbB
(86) International application number: PCT/CN2022/129407
(87) International publication number: WO 2023/098381

(57) **Abstract**

A secondary battery (5) includes an additive. The structure of the additive is R₁-X-R₀, where X is one of carbon, nitrogen, silicon, phosphorus, and sulfur; R₀ includes one or two non-polar groups; and R₁ is a polar chain group or a polar cyclic group, where the chain group includes one or more of double bond, triple bond, and silicon-oxygen bond, and the cyclic group includes one or more of three-membered heterocycle, four-membered heterocycle, five-membered heterocycle, and six-membered heterocycle.

## Description

This application claims priority to Patent Application No. 202111460178.0, filed on December 2, 2021.

### TECHNICAL FIELD

This application relates to the field of battery technologies, and in particular, to a secondary battery and an electric apparatus containing the same.

### BACKGROUND

In recent years, with increasingly wide use of secondary batteries, secondary batteries have been widely used in energy storage power supply systems such as hydroelectric, thermal, wind, and solar power plants, and many other fields including electric tools, electric bicycles, electric motorcycles, electric vehicles, military equipment, and aerospace.

Secondary batteries dominate the portable electronic device market, and become increasingly important for electric vehicles (EVs) and hybrid electric vehicles (HEVs) due to their high energy density, light weight and long lifespan. Among the materials for developing high-energy-density secondary batteries for EVs, silicon (Si) and nickel (Ni)-rich layered oxides have become the main focus of electrode material research due to their high energy storage capacity. However, silicon-based negative electrodes and nickel-rich positive electrodes suffer from structural instability due to anisotropic volume changes and interfacial deterioration, which seriously hinders their practical applications. Therefore, the cycling performance and storage life of secondary batteries are pressing issues to be addressed.

### SUMMARY

To achieve the foregoing objective, a first aspect of this application provides a secondary battery, including an additive, where the structure of the additive is R₁-X-R₀, where X is one of carbon, nitrogen, silicon, phosphorus, and sulfur; R₀ includes one or two non-polar groups; and R₁ is a polar chain group or a polar cyclic group, where the chain group includes one or more of double bond, triple bond, and silicon-oxygen bond, and the cyclic group includes one or more of three-membered heterocycle, four-membered heterocycle, five-membered heterocycle, and six-membered heterocycle.

Therefore, this application provides an additive that can be applied to the positive electrode, negative electrode, and electrolyte, to prevent the interface structure of the secondary battery from being affected by material volume effects and inhibit the contact between the electrolyte and the surface of the active material, thereby improving the storage life and cycling performance of the secondary battery.

In any embodiment, R₀ is a fluorine-containing carbon chain; and optionally, R₀ is a perfluorocarbon chain.

In any embodiment, R₀ contains 2 to 10 carbon atoms.

In any embodiment, the number of main-chain carbon atoms of the additive is less than or equal to 20.

In any embodiment, the double bond is provided by one or more of carboxylic ester, carboxylate, carbonate ester, carbonate, sulfonic ester, sulfonate, sulfate ester, sulfate, phosphoric ester, phosphate, carbon-carbon double bond, carbon-nitrogen double bond, silicate ester, or silicate; and/or the triple bond includes carbon-carbon triple bond or carbon-nitrogen triple bond; and/or the silicon-oxygen bond is provided by silicate ester or silicate.

In any embodiment, the cyclic group includes one or more of structures in the following formulas I to IV: 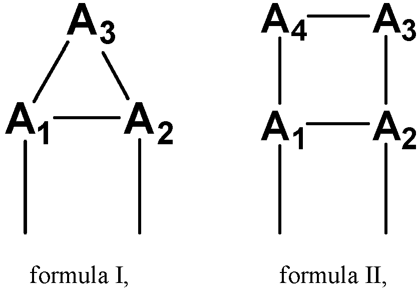 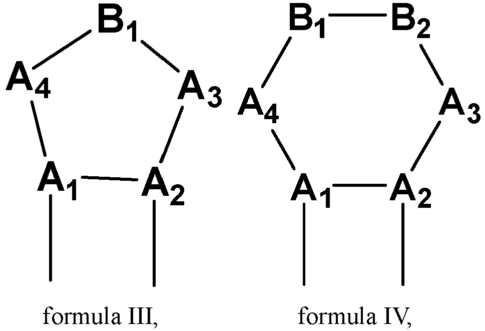 where A₁ to A₄ are each independently selected from carbon, nitrogen, oxygen, sulfur, phosphorus, and silicon, and B₁ and B₂ are each independently selected from carbon, nitrogen, oxygen, sulfur, phosphorus, silicon, and branched chain of a group containing one or more of carboxylic ester, carboxylate, carbonate ester, carbonate, sulfonic ester, sulfonate, sulfate ester, sulfate, phosphoric ester, phosphate, silicate ester, silicate, carbon-carbon double bond, carbon-oxygen double bond, and carbon-nitrogen double bond.

In any embodiment, the secondary battery includes a positive electrode plate, a negative electrode plate, and an electrolyte, and the additive is applied to at least one of the positive electrode plate, the negative electrode plate, or the electrolyte.

In any embodiment, the positive electrode plate includes a positive electrode current collector and a positive electrode film layer formed on surface of the positive electrode current collector, and a mass percentage of the additive in the positive electrode film layer is 0.01% to 10%, optionally 0.05% to 8%.

In any embodiment, the negative electrode plate includes a negative electrode current collector and a negative electrode film layer formed on surface of the negative electrode current collector, and a mass percentage of the additive in the negative electrode film layer is 0.01% to 10%, optionally 0.5% to 10%.

In any embodiment, a mass percentage of the additive in the electrolyte is 0.01% to 10%, optionally 0.01% to 5%.

A second aspect of this application provides a battery module, including the secondary battery according to the first aspect of this application.

A third aspect of this application provides a battery pack, including the battery module according to the second aspect of this application.

A fourth aspect of this application provides an electric apparatus, including one or more of the secondary battery according to the first aspect of this application, the battery module according to the second aspect of this application, or the battery pack according to the third aspect of this application.

### BRIEF DESCRIPTION OF DRAWINGS

FIG. 1 is a schematic structural diagram of an additive according to an embodiment of this application;
FIG. 2 is a schematic diagram of a secondary battery according to an embodiment of this application;
FIG. 3 is an exploded view of the secondary battery according to the embodiment of this application in FIG. 2;
FIG. 4 is a schematic diagram of a battery module according to an embodiment of this application;
FIG. 5 is a schematic diagram of a battery pack according to an embodiment of this application;
FIG. 6 is an exploded view of the battery pack according to the embodiment of this application in FIG. 5; and
FIG. 7 is a schematic diagram of an electric apparatus using a secondary battery as a power source according to an embodiment of this application.

Description of reference signs:
1. battery pack; 2. upper box body; 3. lower box body; 4. battery module; 5. secondary battery; 51. housing; 52. electrode assembly; and 53. top cover assembly.

### DESCRIPTION OF EMBODIMENTS

Embodiments that specifically disclose a separator, a positive electrode plate, a negative electrode plate, an electrolyte, a secondary battery, a battery module, a battery pack, and an electric apparatus of this application are detailed below with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed sequentially or randomly, and preferably, are performed sequentially. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

### [Secondary battery]

Secondary batteries, also referred to as rechargeable batteries or storage batteries, are batteries that can be recharged to activate active materials for continuous use after the batteries are discharged. Generally, a secondary battery includes a positive electrode plate, a negative electrode plate, a separator, and an electrolyte. During charging and discharging of the battery, active ions (for example, lithium ions) intercalate and deintercalate back and forth between the positive electrode plate and the negative electrode plate. The separator is sandwiched between the positive electrode plate and the negative electrode plate to mainly prevent short circuit between the positive and negative electrodes and allow active ions to pass through. The electrolyte is between the positive electrode plate and the negative electrode plate to transport active ions.

### Secondary battery

An embodiment of this application provides a secondary battery, including an additive, where the structure of the additive is R₁-X-R₀, where X is one of carbon, nitrogen, silicon, phosphorus, and sulfur; R₀ includes one or two non-polar groups; and R₁ is a polar chain group or a polar cyclic group, where the chain group includes one or more of double bond, triple bond, and silicon-oxygen bond, and the cyclic group includes one or more of three-membered heterocycle, four-membered heterocycle, five-membered heterocycle, and six-membered heterocycle.

The volume effect of the positive electrode or negative electrode has significant influences on the service life of the cell. 1. A significant volume effect can lead to the rupture and regrowth of the interface film, resulting in a large interface impedance and affecting the kinetic performance of the cell. 2. The regrowth of the interface consumes active lithium in the electrolyte, accelerating the capacity decay of the cell. 3. The regrowth of the interface film consumes excessive electrolyte, reducing lithium-ion transport kinetics and even leading to electrolyte depletion, resulting in a plunge in cell performance. The active catalytic effect of the positive or negative electrode interface on the electrolyte also has significant influences on the service life of the cell. 1. The active catalytic effect of the interface can accelerate the excessive consumption of electrolyte, leading to formation of thick interface components, causing a large interface impedance, and affecting the kinetic performance of the cell. 2. The active catalytic effect of the interface increases the instability of the interface, reducing the storage performance of the cell.

Therefore, in order to stabilize the interface between the positive or negative electrode and the electrolyte, a common practice is to add a film-forming additive to the electrolyte. However, this solution also has some issues. 1. The film-forming additive itself undergoes electrochemical oxidation or reduction reaction during lithium deintercalation or intercalation of the positive or negative electrode, and the film-forming process generally takes place during the formation stage of the cell, making it difficult to guarantee a consistently stable interface during the cycling process. 2. The film-forming additive still consumes active lithium during the oxidation or reduction process, reducing the initial coulombic efficiency. 3. The interface film generated by commonly used film-forming additives has certain mechanical strength and elasticity, but it still cannot match the significant volume effect of the silicon-based negative electrode, limiting the improvement effect on the service life of the cell and even worsening high-temperature storage performance and gas production.

In this application, an additive R₁-X-R₀ is introduced to the secondary battery to solve the above problems. R₀ in the amphiphilic molecule is a hydrophobic fluorocarbon chain. Fluorine is the most electronegative element, so carbon-fluorine (C-F) bond has a high bond energy. In addition, the covalently bonded fluorine atom has a larger atomic radius than the hydrogen atom, able to effectively protect the fluorinated C-C bond. The fluorocarbon chain has the properties of "hydrophobic and oleophobic". Therefore, the fluorinated surfactant has high thermal stability and chemical stability.

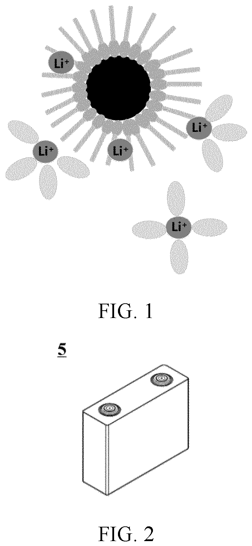

At the electrode/electrolyte interface, a dual-layer structured interface component can be formed by utilizing the "oleophobic" property of the fluorocarbon chain. Referring to the schematic structural diagram in FIG. 1, the inner layer contains cyclic, polar groups or unsaturated bond structures, which can combine with the positive or negative electrode active material through oxidation or reduction, specific adsorption, or bonding to form the inner layer of the interface film. The outer layer contains 2 to 10 fluorocarbon chains. Due to the "oleophobic" property, the fluorocarbon chains can inhibit the penetration of the electrolyte solvent. In other words, the de-solvation of lithium ions takes place at the outer layer of the interface film. Such structure can accommodate the significant volume changes of the silicon-based negative electrode material without the problem of interface component rupture. Moreover, such structure can also prevent direct contact between the electrolyte solvent and the positive/negative electrode active material, inhibiting the oxidative or reductive decomposition of the electrolyte solvent and improving cell performance.

In some embodiments, R₀ is a fluorine-containing carbon chain; and optionally, R₀ is a perfluorocarbon chain.

Perfluorocarbon chain is a fluorine-containing carbon chain in which all hydrogen atoms in the hydrocarbon are replaced by fluorine atoms, providing higher thermal stability and chemical stability.

In some embodiments, R₀ contains 2 to 10 carbon atoms.

The length of the perfluorocarbon chain has a significant impact on the interface modification effect. 1. If the number of carbon atoms in the perfluorocarbon chain is less than 2, the solvation layer of lithium ions cannot be fully desolvated in the outer layer interface of the perfluorocarbon chain. As a result, the contact between the electrolyte solvent and the electrode active material cannot be inhibited, thus failing to suppress the oxidation or reduction reaction of the electrolyte solvent. 2. If the number of carbon atoms in the perfluorocarbon chain exceeds 10, lithium ions, though fully desolvated in the outer layer structure of the perfluorocarbon chain, cannot reach the inner layer containing polar groups, leading to a large interface impedance and affecting the kinetic performance of the cell.

In some embodiments, the number of main-chain carbon atoms of the additive is less than or equal to 20.

The number of carbon atoms in the perfluorocarbon chain does not exceed 10. If the number of main-chain carbon atoms of the amphiphilic molecule exceeds 20, that is, the number of carbon atoms in the polar group exceeds 10, an excessively long polar group carbon chain can lead to formation of a thick inner-layer interface film at the active material interface, inhibiting migration of lithium ions and affecting kinetic performance of the cell.

In some embodiments, the double bond is provided by one or more of carboxylic ester, carboxylate, carbonate ester, carbonate, sulfonic ester, sulfonate, sulfate ester, sulfate, phosphoric ester, phosphate, carbon-carbon double bond, carbon-nitrogen double bond, silicate ester, or silicate; and/or the triple bond includes carbon-carbon triple bond or carbon-nitrogen triple bond; and/or the silicon-oxygen bond is provided by silicate ester or silicate.

In some embodiments, the cyclic group includes one or more of structures in the following formulas I to IV: 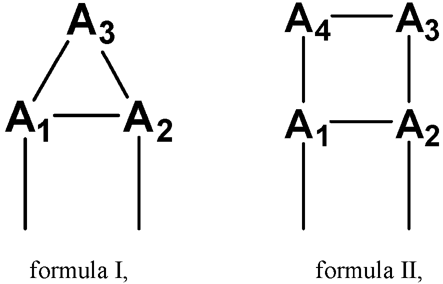 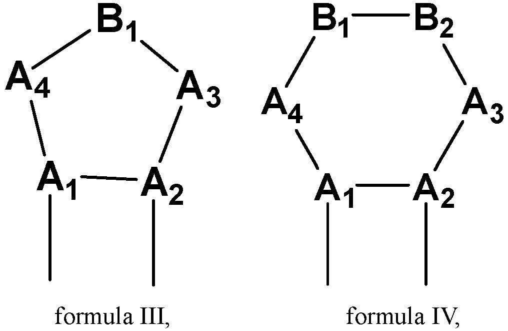 where A₁ to A₄ are each independently selected from carbon, nitrogen, oxygen, sulfur, phosphorus, and silicon, and B₁ and B₂ are each independently selected from carbon, nitrogen, oxygen, sulfur, phosphorus, silicon, and branched chain of a group containing one or more of carboxylic ester, carboxylate, carbonate ester, carbonate, sulfonic ester, sulfonate, sulfate ester, sulfate, phosphoric ester, phosphate, silicate ester, silicate, carbon-carbon double bond, carbon-oxygen double bond, and carbon-nitrogen double bond.

The compound having the above structure is preferably one or more of 3-perfluorobutyl-1,2-oxirane, tetraethylamine perfluorooctanesulfonate, lithium perfluorobutylsulfonate, perfluorobutylsulfonyl fluoride, perfluorobutylethyltriethoxysilane, 1H,1H,2H,2H-perfluorohexyltrimethoxysilane, perfluorobutylethylene, perfluorobutylethyl acrylate, dodecafluoroheptyl acrylate, perfluorodecylethanethiol, nonafluoropentanoic acid, perfluorobutylsulfonic acid, perfluorohexylethylsulfonic acid, lithium perfluorohexylsulfonate, perfluorohexylethylene, hexafluorobutyl acrylate, 3-(1H,1H,5H octafluoropentyloxy)-1,2-propylene oxide, 3-(2,2,3,3-tetrafluoropropoxy)-1,2-propylene oxide, 3-(perfluorooctyl base)-1,2-propylene oxide, 1H,1H,SH-octafluoropentyl methacrylate, 2,2,3,3-tetrafluoropropyl methacrylate, heptafluorobutyric anhydride, 3-(perfluoro-n-hexyl) propylene oxide, 3-(2-perfluorohexylethoxy)-1,2-propylene oxide, bisperfluorooctyl substituted ethylene carbonate, bis-perfluorohexyl substituted ethylene carbonate, bisperfluorobutyl substituted ethylene carbonate, bisperfluoroethyl substituted ethylene carbonate, perfluorooctyl substituted ethylene sulfate, perfluorohexyl substituted ethylene sulfate, perfluorobutyl substituted ethylene sulfate, perfluoroethyl substituted ethylene sulfate, perfluorooctyl substituted propane sultone, perfluorohexyl substituted propane sultone, perfluorobutyl substituted propane sultone, and perfluoroethyl substituted propane sultone.

The polar head of the perfluorocarbon chain is a structure of double bond, triple bond, silicon-oxygen bond, and three- to six-membered heterocycles. The head group containing double bond or triple bond, due to its high electron cloud density, undergoes oxidation or reduction reactions with solvents and bonds with transition metal ions in the positive electrode material or silicon-oxygen groups in the silicon-based negative electrode material. Additionally, the group containing unsaturated bonds, due to the high electron cloud density, complexes with transition metal ions, thus binding to the positive electrode active material interface. The head group containing silicon-oxygen bond and the silicon-based negative electrode material interface can be triggered under specific conditions to form Si-O-Si bonds to bind with the silicon-based negative electrode active material interface. The head group containing three- to six-membered heterocycles can undergo ring-opening reactions through oxidation or reduction to form bonds with transition metal ions, silicon, or oxygen. Moreover, the three- to six-membered heterocycles contain some electron-rich groups such as phosphorus-oxygen double bond, silicon-oxygen double bond, and sulfur-oxygen double bond. These electron-rich heterocycles also complex with transition metal ions. In summary, these polar head groups are prone to oxidation, reduction, bonding with silicon/oxygen, or complexation with transition metal ions, allowing them to tightly bind to the positive or negative electrode active material interface to form the polar inner layer of the dual-layer interface film. The tail of the perfluorocarbon chain containing 2 to 10 carbon atoms resides at the outer layer of the dual-layer interface film and is in direct contact with the electrolyte. It serves to prevent direct contact between the electrolyte and the active material interface, inhabiting excessive consumption of the electrolyte caused by oxidation or reduction reactions.

In some embodiments, the secondary battery includes a positive electrode plate, a negative electrode plate, and an electrolyte, and the additive is applied to at least one of the positive electrode plate, the negative electrode plate, or the electrolyte.

In the secondary battery of this application, the content of the amphoteric substance has a significant influence on the interface modification effect. When its mass percentage is within the range provided in this application, the amphoteric substance can uniformly cover the active material interface, inhibiting the contact between the electrolyte and the active material without increasing the interface impedance or affecting kinetic performance of the cell.

### [Positive electrode plate]

The positive electrode plate typically includes a positive electrode current collector and a positive electrode film layer provided on at least one surface of the positive electrode current collector, where the positive electrode film layer includes a positive electrode active material.

For example, the positive electrode current collector includes two opposite surfaces in its thickness direction, and the positive electrode film layer is disposed on either or both of the two opposite surfaces of the positive electrode current collector.

In some embodiments, the positive electrode film layer may include the additive described in this application. A mass percentage of the additive in the positive electrode film layer may be 0.01% to 10%, optionally 0.05% to 8%.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a well-known positive electrode active material used for batteries in the art. For example, the positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the additive described in this application, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode film layer may include the additive described in this application. A mass percentage of the additive in the negative electrode film layer may be 0.01% to 10%, optionally 0.5% to 10%.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (matrices such as polypropylene (PP), polyethylene terephthalate (PET), polybutylene terephthalate (PBT), polystyrene (PS), or polyethylene (PE)).

In some embodiments, the negative electrode active material may be a well-known negative electrode active material used for batteries in the art. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may represent at least one selected from elemental tin, tin-oxygen compound, or tin alloy. However, this application is not limited to these materials, and may alternatively use other conventional materials that can be used as negative electrode active materials for batteries. One type of these negative electrode active materials may be used alone, or two or more of them may be used in combination.

In some embodiments, the negative electrode film layer further optionally includes a binder. For example, the binder may represent at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), or carboxymethyl chitosan (CMCS).

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other additives such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Electrolyte]

The electrolyte is not specifically limited to any particular type in this application, and may be selected based on needs. For example, the electrolyte may be in a liquid state, a gel state, or an all-solid state.

In some embodiments, the electrolyte may include the additive described in this application. A mass percentage of the additive in the electrolyte may be 0.01% to 10%, optionally 0.01% to 5%.

In some embodiments, the electrolyte is liquid and includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bistrifluoromethanesulfonimide, lithium trifluoromethanesulfonat, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, sodium salt and potassium salt are also not specifically limited and may be selected according to actual needs.

In some embodiments, the electrolyte further optionally includes an additive. For example, the additive may include a negative electrode film-forming additive and a positive electrode film-forming additive, or may include an additive that can improve some performance of the battery, for example, an additive for improving over-charge performance of the battery and an additive for improving high-temperature performance or low-temperature performance of the battery.

### [Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

This application does not impose any special limitations on a shape of the secondary battery, and the secondary battery may be cylindrical, rectangular, or of any other shapes. For example, FIG. 2 shows a secondary battery 5 of a rectangular structure as an example.

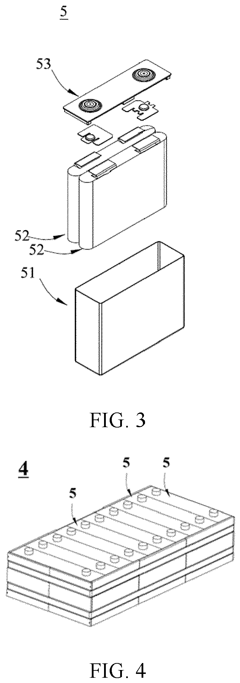

In some embodiments, referring to FIG. 3, the outer package may include a housing 51 and a cover plate 53. The housing 51 may include a base plate and side plates connected onto the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates into the electrode assembly 52. The secondary battery 5 may include one or more electrode assemblies 52, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 4 shows a battery module 4 as an example. Referring to FIG. 4, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened through fasteners.

Optionally, the battery module 4 may further include a housing with accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

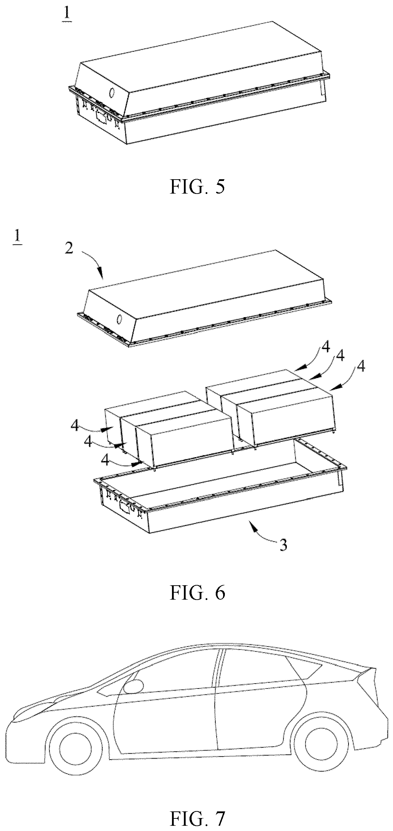

FIG. 5 and FIG. 6 show a battery pack 1 as an example. Refer to FIG. 5 and FIG. 6. The battery pack 1 may include a battery box and a plurality of battery modules 4 arranged in the battery box. The battery box includes an upper box body 2 and a lower box body 3, where the upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 7 shows an electric apparatus as an example. The electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

### [Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Preparation of examples

### (1) Preparation of positive electrode plate

LFP positive electrode: A positive electrode active material lithium iron phosphate, a conductive agent acetylene black, and a binder polyvinylidene fluoride (PVDF) were fully stirred and mixed to uniformity in a solvent N-methylpyrrolidone (NMP) at a weight ratio of 90:5:5 to obtain a positive electrode slurry, and then the positive electrode slurry was uniformly applied onto a positive electrode current collector, followed by drying, cold pressing, and cutting to obtain a positive electrode plate.

Ni0 positive electrode: A positive electrode active material LiNi_{0.8}Co_{0.1}Mn_{0.1}O₂ (NCM811), a conductive agent acetylene black, and a binder polyvinylidene fluoride (PVDF) were fully stirred and mixed to uniformity in a solvent N-methylpyrrolidone (NMP) at a weight ratio of 90:5:5 to obtain a positive electrode slurry, and then the positive electrode slurry was uniformly applied onto a positive electrode current collector, followed by drying, cold pressing, and cutting to obtain a positive electrode plate.

Ni1 positive electrode: A positive electrode active material LiNi_{0.8}Co_{0.1}Mn_{0.1}O₂ (NCM811), a conductive agent acetylene black, and a binder polyvinylidene fluoride (PVDF) were dissolved in a solvent N-methylpyrrolidone (NMP) at a weight ratio of 90:5:5, added with 1wt% 3-perfluorobutyl-1,2-oxirane, and then fully stirred and mixed to uniformity to obtain a positive electrode slurry, and then the positive electrode slurry was uniformly applied onto a positive electrode current collector, followed by drying, cold pressing, and cutting to obtain a positive electrode plate.

Ni2 positive electrode: A positive electrode active material LiNi_{0.8}Co_{0.1}Mn_{0.1}O₂ (NCM811) and tetraethylamine perfluorooctanesulfonate were immersed in EMC at a mass ratio of 98:2, and filtered after stirring for 24 h. The resulting product was dried in vacuum at 80°C for 12 h, dissolved with a conductive agent acetylene black and a binder polyvinylidene fluoride (PVDF) in a solvent N-methylpyrrolidone (NMP) at a weight ratio of 90:5:5, and fully stirred and mixed to uniformity to obtain a positive electrode slurry, and then the positive electrode slurry was uniformly applied onto a positive electrode current collector, followed by drying, cold pressing, and cutting to obtain a positive electrode plate.

Ni3 positive electrode: A positive electrode active material LiNi_{0.8}Co_{0.1}Mn_{0.1}O₂ (NCM811) and lithium perfluorobutylsulfonate were immersed in EMC at a mass ratio of 98:2, and filtered after stirring for 24 h. The resulting product was dried in vacuum at 80°C for 12 h, dissolved with a conductive agent acetylene black and a binder polyvinylidene fluoride (PVDF) in a solvent N-methylpyrrolidone (NMP) at a weight ratio of 90:5:5, and fully stirred and mixed to uniformity to obtain a positive electrode slurry, and then the positive electrode slurry was uniformly applied onto a positive electrode current collector, followed by drying, cold pressing, and cutting to obtain a positive electrode plate.

Ni4 positive electrode: A positive electrode active material LiNi_{0.8}Co_{0.1}Mn_{0.1}O₂ (NCM811), a conductive agent acetylene black, and a binder polyvinylidene fluoride (PVDF) were dissolved in a solvent N-methylpyrrolidone (NMP) at a weight ratio of 90:5:5, added with 1wt% N,N'-bis(3-perfluorohexyl-2-hydroxypropyl)-N,N'-disulfopropylhexamethylenediamine, and then fully stirred and mixed to uniformity to obtain a positive electrode slurry, and then the positive electrode slurry was applied onto a positive electrode current collector, followed by drying, cold pressing, and cutting to obtain a positive electrode plate.

### (2) Preparation of negative electrode plate

C negative electrode: An active substance artificial graphite, a conductive agent acetylene black, a binder styrene-butadiene rubber (SBR), and a thickener sodium carboxymethyl cellulose (CMC) were dissolved in a solvent deionized water at a mass ratio of 90:4:4:2, and were mixed to uniformity to obtain a negative electrode slurry. The negative electrode slurry was uniformly applied onto a negative electrode current collector copper foil one or more times, and dried to obtain a negative electrode film, followed by cold pressing and cutting, to obtain a negative electrode plate.

Si0 negative electrode: An active substance silicon-carbon composite material, a conductive agent acetylene black, a binder styrene-butadiene rubber (SBR), and a thickener sodium carboxymethyl cellulose (CMC) were dissolved in a solvent deionized water at a mass ratio of 90:4:4:2, and were mixed to uniformity to obtain a negative electrode slurry. The negative electrode slurry was uniformly applied onto a negative electrode current collector copper foil one or more times, and dried to obtain a negative electrode film, followed by cold pressing and cutting, to obtain a negative electrode plate.

Si1 negative electrode: An active substance silicon-carbon composite material, a conductive agent acetylene black, a binder styrene-butadiene rubber (SBR), and a thickener sodium carboxymethyl cellulose (CMC) were dissolved in a solvent deionized water at a weight ratio of 90:4:4:2, added with 1wt% perfluorobutylsulfonyl fluoride, and then mixed to uniformity to obtain a negative electrode slurry. The negative electrode slurry was uniformly applied onto a negative electrode current collector copper foil one or more times, and dried to obtain a negative electrode film, followed by cold pressing and cutting, to obtain a negative electrode plate.

Si2 negative electrode: An active substance silicon-carbon composite material and perfluorobutylethyltriethoxysilane were immersed in deionized water at a mass ratio of 98:2, and filtered after 24-hour stirring. The resulting product was dried in vacuum at 100°C for 24 h, dissolved with a conductive agent acetylene black, a binder styrene-butadiene rubber (SBR), and a thickener sodium carboxymethyl cellulose (CMC) in a solvent deionized water at a weight ratio of 90:4:4:2, and then mixed to uniformity to obtain a negative electrode slurry. The negative electrode slurry was uniformly applied onto a negative electrode current collector copper foil one or more times, and dried to obtain a negative electrode film, followed by cold pressing and cutting, to obtain a negative electrode plate.

Si3 negative electrode: An active substance silicon-carbon composite material and 1H,1H,2H,2H-perfluorohexyltrimethoxysilane were immersed in deionized water at a mass ratio of 98:2, and filtered after 24-hour stirring. The resulting product was dried in vacuum at 100°C for 24 h, dissolved with a conductive agent acetylene black, a binder styrene-butadiene rubber (SBR), and a thickener sodium carboxymethyl cellulose (CMC) in a solvent deionized water at a weight ratio of 90:4:4:2, and then mixed to uniformity to obtain a negative electrode slurry. The negative electrode slurry was uniformly applied onto a negative electrode current collector copper foil one or more times, and dried to obtain a negative electrode film, followed by cold pressing and cutting, to obtain a negative electrode plate.

Si4 negative electrode: An active substance silicon-carbon composite material, a conductive agent acetylene black, a binder styrene-butadiene rubber (SBR), and a thickener sodium carboxymethyl cellulose (CMC) were dissolved in a solvent deionized water at a weight ratio of 90:4:4:2, added with 1wt% 2-perfluorododecylethyl methacrylate, and mixed to uniformity to obtain a negative electrode slurry. The negative electrode slurry was uniformly applied onto a negative electrode current collector copper foil one or more times, and dried to obtain a negative electrode film, followed by cold pressing and cutting, to obtain a negative electrode plate.

Si5 negative electrode: An active substance silicon-carbon composite material, a conductive agent acetylene black, a binder styrene-butadiene rubber (SBR), and a thickener sodium carboxymethyl cellulose (CMC) were dissolved in a solvent deionized water at a weight ratio of 90:4:4:2, added with 1wt% 2,2-dimethyl-6,6,7,7,8,8,8-heptafluoro-3,5-octanedione, and mixed to uniformity to obtain a negative electrode slurry. The negative electrode slurry was uniformly applied onto a negative electrode current collector copper foil one or more times, and dried to obtain a negative electrode film, followed by cold pressing and cutting, to obtain a negative electrode plate.

Si6 negative electrode: An active substance silicon-carbon composite material, a conductive agent acetylene black, a binder styrene-butadiene rubber (SBR), and a thickener sodium carboxymethyl cellulose (CMC) were dissolved in a solvent deionized water at a weight ratio of 90:4:4:2, added with 1wt% 4-perfluorooctylaniline, and mixed to uniformity to obtain a negative electrode slurry. The negative electrode slurry was uniformly applied onto a negative electrode current collector copper foil one or more times, and dried to obtain a negative electrode film, followed by cold pressing and cutting, to obtain a negative electrode plate.

### (3) Preparation of electrolyte

E0 electrolyte: In an argon atmosphere glove box (H₂O < 0.1 ppm, and O₂ < 0.1 ppm), organic solvents EC and EMC were mixed well at a volume ratio of 3:7, and 12.5% lithium salt LiPF₆ was added to dissolve in the organic solvent. Then 1% PS, 0.5% DTD, 0.5% VC, and 2% FEC were added as the additives to the mixed solvent, and well stirred to obtain a corresponding electrolyte.

E1 electrolyte: In an argon atmosphere glove box (H₂O < 0.1 ppm, and O₂ < 0.1 ppm), organic solvents EC and EMC were mixed well at a volume ratio of 3:7, and 12.5% lithium salt LiPF₆ was added to dissolve in the organic solvent. Then 1% PS, 0.5% DTD, 0.5% VC, 2% FEC, and 1% perfluorobutyl ethylene were added as the additives to the mixed solvent, and well stirred to obtain a corresponding electrolyte.

E2 electrolyte: In an argon atmosphere glove box (H₂O < 0.1 ppm, and O₂ < 0.1 ppm), organic solvents EC and EMC were mixed well at a volume ratio of 3:7, and 12.5% lithium salt LiPF₆ was added to dissolve in the organic solvent. Then 1% PS, 0.5% DTD, 0.5% VC, 2% FEC, and 1% perfluorobutylethyl acrylate were added as the additives to the mixed solvent, and well stirred to obtain a corresponding electrolyte.

E3 electrolyte: In an argon atmosphere glove box (H₂O < 0.1 ppm, and O₂ < 0.1 ppm), organic solvents EC and EMC were mixed well at a volume ratio of 3:7, and 12.5% lithium salt LiPF₆ was added to dissolve in the organic solvent. Then 1% PS, 0.5% DTD, 0.5% VC, 2% FEC, and 1% (3,3,3-trifluoropropyl) trimethoxysilane were added as the additives to the mixed solvent, and well stirred to obtain a corresponding electrolyte.

### (4) Preparation of separator

A polypropylene film was used as a separator.

### (5) Preparation of secondary battery

The positive electrode plate, the separator, and the negative electrode plate were sequentially stacked, so that the separator was located between the positive electrode plate and the negative electrode plate for separation, and then were made into an electrode assembly through winding. The electrode assembly was placed into a battery housing which was filled with the electrolyte after drying, followed by processes such as formation and standing, to obtain a lithium-ion battery.

**Table 1 Preparation parameters of Examples 1 to 29 and Comparative Example 3**

| No. | Positive electrode | Negative electrode | Electrolyte |
|---|---|---|---|
| Example 1 | LFP positive electrode | Si1 negative electrode | E0 electrolyte |
| Example 2 | LFP positive electrode | Si2 negative electrode | E0 electrolyte |
| Example 3 | LFP positive electrode | Si3 negative electrode | E0 electrolyte |
| Example 4 | Ni1 positive electrode | C negative electrode | E0 electrolyte |
| Example 5 | Ni2 positive electrode | C negative electrode | E0 electrolyte |
| Example 6 | Ni3 positive electrode | C negative electrode | E0 electrolyte |
| Example 7 | Ni1 positive electrode | Si1 negative electrode | E0 electrolyte |
| Example 8 | Ni2 positive electrode | Si1 negative electrode | E0 electrolyte |
| Example 9 | Ni3 positive electrode | Si1 negative electrode | E0 electrolyte |
| Example 10 | Ni1 positive electrode | Si2 negative electrode | E0 electrolyte |
| Example 11 | Ni2 positive electrode | Si2 negative electrode | E0 electrolyte |
| Example 12 | Ni3 positive electrode | Si2 negative electrode | E0 electrolyte |
| Example 13 | Ni1 positive electrode | Si3 negative electrode | E0 electrolyte |
| Example 14 | Ni2 positive electrode | Si3 negative electrode | E0 electrolyte |
| Example 15 | Ni3 positive electrode | Si3 negative electrode | E0 electrolyte |
| Example 16 | Ni1 positive electrode | Si4 negative electrode | E0 electrolyte |
| Example 17 | Ni2 positive electrode | Si4 negative electrode | E0 electrolyte |
| Example 18 | Ni3 positive electrode | Si4 negative electrode | E0 electrolyte |
| Example 19 | LFP positive electrode | Si0 negative electrode | E1 electrolyte |
| Example 20 | LFP positive electrode | Si0 negative electrode | E2 electrolyte |
| Example 21 | Ni0 positive electrode | C negative electrode | E1 electrolyte |
| Example 22 | Ni0 positive electrode | C negative electrode | E2 electrolyte |
| Example 23 | Ni0 positive electrode | Si0 negative electrode | E1 electrolyte |
| Example 24 | Ni0 positive electrode | Si0 negative electrode | E2 electrolyte |
| Example 25 | LFP positive electrode | Si4 negative electrode | E0 electrolyte |
| Example 26 | Ni4 positive electrode | C negative electrode | E0 electrolyte |
| Example 27 | Ni4 positive electrode | Si4 negative electrode | E0 electrolyte |
| Example 28 | LFP positive electrode | Si0 negative electrode | E3 electrolyte |
| Example 29 | Ni0 positive electrode | C negative electrode | E3 electrolyte |
| Example 30 | Ni0 positive electrode | Si0 negative electrode | E3 electrolyte |
| Example 31 | LFP positive electrode | Si5 negative electrode | E0 electrolyte |
| Example 32 | LFP positive electrode | Si6 negative electrode | E0 electrolyte |
| Comparative Example 1 | LFP positive electrode | Si0 negative electrode | E0 electrolyte |
| Comparative Example 2 | Ni0 positive electrode | C negative electrode | E0 electrolyte |
| Comparative Example 3 | Ni0 positive electrode | Si0 negative electrode | E0 electrolyte |

### Test method

### 1. Internal resistance test of cell

At 25°C, the lithium-ion battery to be delivered and the lithium-ion battery already subjected to 800 cycles at 45°C were charged at a constant current of 1C to 4.3 V, charged at a constant voltage of 4.3 V until the current was less than 0.05C, and then discharged at 1C for 30 min, to adjust the cells to 50%SOC. The positive and negative terminals of the TH2523AAC internal resistance tester were used to touch the positive and negative electrodes of the cells, respectively. The internal resistance values of the batteries were read from the internal resistance tester and respectively recorded as the initial cell internal resistance and the cell internal resistance after 800 cycles.

### 2. Capacity retention rate test

At 45°C, the lithium-ion batteries were charged to 4.3 V at a constant current of 1C, charged at a constant voltage of 4.3 V to a current less than 0.05C, and then discharged to 3.0 V at a constant current of 1C. This was one charge and discharge cycle. The charge and discharge cycle was repeated and the capacity retention rates of the lithium-ion batteries after 800 cycles were calculated. Capacity retention rate (%) of lithium-ion battery after 800 cycles at 45°C = (discharge capacity at the 800th cycle/discharge capacity at the first cycle) × 100%.

### 3. Volume swelling rate test

At 25°C, the lithium-ion battery was charged at a constant current of 1C to a voltage of 4.3 V, and then charged at a constant voltage of 4.3 V to a current of 0.05C. The volume of the lithium-ion battery at that time was tested and recorded as V1. Then the fully charged lithium-ion battery was put into an incubator at 60°C and stored for 50 days. The volume was tested by the drainage method and recorded as V2. Volume swelling rate (%) of lithium-ion battery after 50 days of storage at 60°C = (V2 - V1)/V1 × 100%

### Experimental Example 1

**Table 2 Study on use of additives for negative electrode**

| No. | Initial internal resistance of cell (mΩ) | Internal resistance of cell after 800 cycles (mΩ) | Capacity retention rate (%) after 800 cycles at 45°C | Volume swelling rate (%) after storage for 50 days at 60°C |
|---|---|---|---|---|
| Example 1 | 783 | 890 | 68 | 26 |
| Example 2 | 761 | 871 | 75 | 24 |
| Example 3 | 763 | 873 | 72 | 25 |
| Example 25 | 890 | 1093 | 20 | 42 |
| Example 31 | 855 | 1045 | 28 | 40 |
| Example 32 | 848 | 1039 | 31 | 39 |
| Comparative Example 1 | 865 | 1053 | 25 | 42 |

In Examples 1 to 3, the silicon-carbon composite material interface is covered by perfluorocarbon chain-containing amphiphilic molecules. The polar head groups bind with the silicon-carbon active material, forming the inner layer of the interface film. The non-polar perfluorocarbon chains are located in the outer layer of the interface film, in contact with the electrolyte. As the silicon-carbon material undergoes a significant volume effect during lithium deintercalation or intercalation, the amphiphilic molecules gradually expand outwards or contract inwards with the changes of the silicon-carbon material without the problem of the polar head groups and the silica-carbon material being detached from each other. Additionally, the "oleophobic" property of the outer layer of perfluorocarbon chain can prevent contact between the electrolyte solvent and the silicon-carbon material interface, thereby suppressing electrolyte decomposition reactions. This also prevents active lithium consumption caused by interface film restructuring and gas generation caused by decomposition of the electrolyte solvent, thereby effectively improving the performance of the cell.

In Example 25, the silicon-carbon composite material interface is covered by perfluorocarbon chain-containing amphiphilic molecules that contain more than 10 carbon atoms. Due to the excessive length of the non-polar perfluorocarbon chains, lithium ions, though fully desolvated in the outer layer structure of perfluorocarbon chain, cannot reach the inner layer containing polar groups, leading to a large interface impedance and affecting the kinetic performance of the cell.

In Examples 31 and 32, the polar groups in the perfluorocarbon chain-containing amphiphilic molecules covering the silicon-carbon composite material interface are not within the range of preferred groups. They have a limited improvement effect on the interface, and make a smaller performance improvement compared to Comparative Example 1.

In Comparative Example 1, the unmodified silicon-carbon composite material is used, leading to a poor cycle life of the cell. This is mainly due to the significant volume effect of the silicon-carbon composite material during lithium deintercalation and intercalation. This leads to the rupture and regeneration of interface components, resulting in the formation of relatively thick interface components during cycling. Therefore, the internal resistance of the cell after 800 cycles is quite large. The regrowth of the interface requires consumption of active lithium, which also causes a rapid decrease in capacity retention during cycling. Additionally, due to continuous electrolyte consumption, a large amount of gas is generated, resulting in severe volume swelling during storage at 60°C.

### Experimental Example 2

**Table 3 Study on use of additives for positive electrode**

| No. | Initial internal resistance of cell (mΩ) | Internal resistance of cell after 800 cycles (mΩ) | Capacity retention rate (%) after 800 cycles at 45°C | Volume swelling rate (%) after storage for 50 days at 60°C |
|---|---|---|---|---|
| Example 4 | 653 | 814 | 78 | 14 |
| Example 5 | 641 | 805 | 83 | 11 |
| Example 6 | 645 | 810 | 81 | 13 |
| Example 26 | 730 | 1013 | 39 | 21 |
| Comparative Example 2 | 701 | 903 | 41 | 21 |

In Examples 4 to 6, the high-nickel material interface is covered by perfluorocarbon chain-containing amphiphilic molecules. The polar head groups bind with the transition metal ions at the high-nickel material interface, forming the inner layer of the interface film. Such inner-layer structure can reduce the catalytic active sites at the high-nickel positive electrode interface, and improve the interface stability under high SOC conditions. The non-polar perfluorocarbon chains are located in the outer layer of the interface film, in contact with the electrolyte. The "oleophobic" property of the outer layer of perfluorocarbon chain can prevent contact between the electrolyte solvent and the high-nickel material interface, thereby suppressing electrolyte decomposition reactions and effectively improving the performance of the cell.

In Example 26, the high-nickel material interface is covered by perfluorocarbon chain-containing amphiphilic molecules whose main chain length exceeds 20 carbon atoms. The number of carbon atoms in the perfluorocarbon chain does not exceed 10. If the number of main-chain carbon atoms of the amphiphilic molecule exceeds 20, that is, the number of carbon atoms in the polar group exceeds 10, an excessively long polar group carbon chain can lead to formation of a thick inner-layer interface film at the active material interface, resulting in a larger interface impedance that inhibits migration of lithium ions and affects kinetic performance of the cell.

In Comparative Example 2, the unmodified high-nickel material is used, leading to a poor cycle life of the cell. This is mainly because a significant amount of catalytically active Ni⁴⁺ is generated during lithium deintercalation in the high-nickel material. Ni⁴⁺ can catalyze the decomposition of the electrolyte, leading to increased interface instability. The unstable interface structure worsens the capacity retention during the cycling process and increases internal resistance and gas generation.

### Experimental Example 3

**Table 4 Study on use of additives for both positive and negative electrodes**

| No. | Initial internal resistance of cell (mΩ) | Internal resistance of cell after 800 cycles (mΩ) | Capacity retention rate (%) after 800 cycles at 45°C | Volume swelling rate (%) after storage for 50 days at 60°C |
|---|---|---|---|---|
| Example 7 | 931 | 1156 | 53 | 33 |
| Example 8 | 923 | 1131 | 59 | 30 |
| Example 9 | 927 | 1139 | 57 | 31 |
| Example 10 | 944 | 1169 | 47 | 40 |
| Example 11 | 936 | 1144 | 53 | 37 |
| Example 12 | 940 | 1152 | 51 | 38 |
| Example 13 | 922 | 1147 | 60 | 29 |
| Example 14 | 914 | 1122 | 66 | 26 |
| Example 15 | 918 | 1130 | 64 | 27 |
| Example 16 | 933 | 1158 | 55 | 33 |
| Example 17 | 925 | 1133 | 61 | 30 |
| Example 18 | 929 | 1141 | 59 | 31 |
| Example 27 | 1010 | 1330 | 11 | 51 |
| Comparative Example 3 | 1005 | 1323 | 12 | 50 |

In Examples 7 to 18, both the high-nickel material interface and the silicon-carbon composite material interface are covered by perfluorocarbon chain-containing amphiphilic molecules. Such dual-layer interface structure formed by the amphiphilic molecules can reduce the active sites at the high-nickel positive electrode interface and adapt to the significant volume effect of the silicon-carbon composite material. Such structure can also prevent contact between the electrolyte solvent and the positive or negative electrode interface, suppressing problems such as increased impedance, accelerated capacity retention decline, and deteriorated gas production caused by excessive electrolyte consumption and loss of active lithium. Such dual-layer interface structure with perfluorocarbon chain-containing amphiphilic molecules formed at the positive or negative electrode interface can effectively enhance the performance of the cell.

In Example 27, the silicon-carbon composite material interface is covered by perfluorocarbon chain-containing amphiphilic molecules that contain more than 10 carbon atoms, and the high-nickel material interface is covered by perfluorocarbon chain-containing amphiphilic molecules whose main chain length exceeds 20 carbon atoms. These non-compliant amphiphilic molecules result in a large interface impedance at the electrode/electrolyte interface, inhibiting lithium ion migration and affecting the performance of the cell.

In Comparative Example 3, the unmodified high-nickel material and silicon-carbon negative electrode material are used, leading to a poor cycle life of the cell. This is mainly because the catalytically active transition metal ions at the high-nickel material interface and the significant volume effect of the silicon-carbon material during lithium deintercalation or intercalation make both the positive and negative electrode interface components unstable. The rupture, restructuring, and instability of the interface structure all worsen the capacity retention of the cell and increase internal resistance and gas generation.

### Experimental Example 4

**Table 5 Study on use of additives for electrolyte**

| No. | Initial internal resistance of cell (mΩ) | Internal resistance of cell after 800 cycles (mΩ) | Capacity retention rate (%) after 800 cycles at 45°C | Volume swelling rate (%) after storage for 50 days at 60°C |
|---|---|---|---|---|
| Example 19 | 788 | 895 | 65 | 27 |
| Example 20 | 789 | 897 | 63 | 28 |
| Example 21 | 661 | 821 | 75 | 15 |
| Example 22 | 663 | 825 | 74 | 16 |
| Example 23 | 937 | 1161 | 51 | 35 |
| Example 24 | 941 | 1172 | 48 | 36 |
| Example 28 | 871 | 1063 | 23 | 45 |
| Example 29 | 711 | 913 | 39 | 23 |
| Example 30 | 1023 | 1331 | 10 | 53 |
| Comparative Example 1 | 865 | 1053 | 25 | 42 |
| Comparative Example 2 | 701 | 903 | 41 | 21 |
| Comparative Example 3 | 1005 | 1323 | 12 | 50 |

In Examples 19 to 24, the electrolyte used contains perfluorocarbon chain-containing amphiphilic molecules. These amphiphilic molecules implement specific distribution or specific adsorption at the interface, spontaneously forming a dual-layer interface structure with different polarities at the positive or negative electrode interface. Such dual-layer structure can prevent contact between the electrolyte solvent and the positive or negative electrode interface, suppressing cell performance degradation caused by excessive electrolyte consumption and loss of active lithium.

In Examples 28 to 30, the amphiphilic molecules in the electrolyte used do not contain perfluorocarbon chains, and are unable to achieve desolvation of lithium ions in the outer layer, that is, they are unable to prevent contact between the electrolyte solvent and the active material. This results in excessive decomposition of the electrolyte solvent, leading to reduced performance of the cell.

In Comparative Examples 1 to 3, the electrolyte containing amphiphilic molecules without a perfluorocarbon chain structure is used in systems with unmodified high-nickel positive electrode material or silicon-carbon negative electrode material, leading to a poor cycle life of the cell. This is mainly because the catalytic activity of the high-nickel material interface and the significant volume effect of the silicon-carbon material make the positive or negative electrode interface components unstable. The unstable interface structure reduces the performance of the cell.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A secondary battery, comprising an additive, wherein the structure of the additive is R₁-X-R₀, wherein X is one of carbon, nitrogen, silicon, phosphorus, and sulfur; R₀ comprises one or two non-polar groups; and R₁ is a polar chain group or a polar cyclic group, wherein the chain group comprises one or more of double bond, triple bond, and silicon-oxygen bond, and the cyclic group comprises one or more of three-membered heterocycle, four-membered heterocycle, five-membered heterocycle, and six-membered heterocycle.

2. The secondary battery according to claim 1, **characterized in that** R₀ is a fluorine-containing carbon chain; and optionally, R₀ is a perfluorocarbon chain.

3. The secondary battery according to claim 2, **characterized in that** R₀ contains 2 to 10 carbon atoms.

4. The secondary battery according to any one of claims 1 to 3, wherein the number of main-chain carbon atoms of the additive is less than or equal to 20.

5. The secondary battery according to any one of claims 1 to 4, **characterized in that** the double bond is provided by one or more of carboxylic ester, carboxylate, carbonate ester, carbonate, sulfonic ester, sulfonate, sulfate ester, sulfate, phosphoric ester, phosphate, carbon-carbon double bond, carbon-nitrogen double bond, silicate ester, or silicate; and/or the triple bond comprises carbon-carbon triple bond or carbon-nitrogen triple bond; and/or the silicon-oxygen bond is provided by silicate ester or silicate.

6. The secondary battery according to any one of claims 1 to 5, **characterized in that** the cyclic group comprises one or more of structures in the following formulas I to IV: 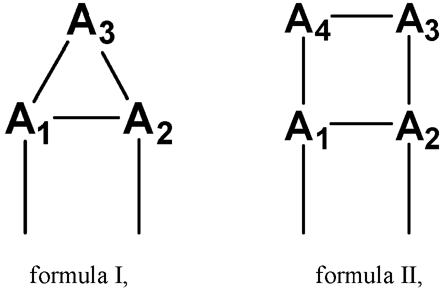 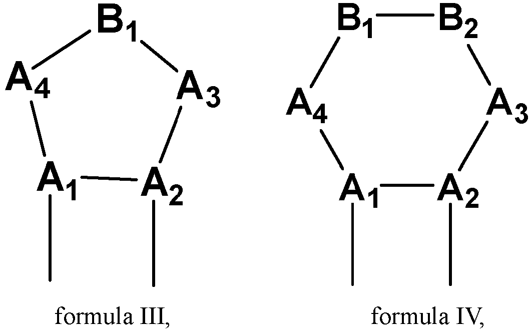 wherein A₁ to A₄ are each independently selected from carbon, nitrogen, oxygen, sulfur, phosphorus, and silicon, and B₁ and B₂ are each independently selected from carbon, nitrogen, oxygen, sulfur, phosphorus, silicon, and branched chain of a group containing one or more of carboxylic ester, carboxylate, carbonate ester, carbonate, sulfonic ester, sulfonate, sulfate ester, sulfate, phosphoric ester, phosphate, silicate ester, silicate, carbon-carbon double bond, carbon-oxygen double bond, and carbon-nitrogen double bond.

7. The secondary battery according to any one of claims 1 to 6, **characterized in that** the secondary battery comprises a positive electrode plate, a negative electrode plate, and an electrolyte, and the additive is applied to at least one of the positive electrode plate, the negative electrode plate, or the electrolyte.

8. The secondary battery according to claim 7, **characterized in that** the positive electrode plate comprises a positive electrode current collector and a positive electrode film layer formed on surface of the positive electrode current collector, and a mass percentage of the additive in the positive electrode film layer is 0.01% to 10%, optionally 0.05% to 8%.

9. The secondary battery according to claim 7 or 8, **characterized in that** the negative electrode plate comprises a negative electrode current collector and a negative electrode film layer formed on surface of the negative electrode current collector, and a mass percentage of the additive in the negative electrode film layer is 0.01% to 10%, optionally 0.5% to 10%.

10. The secondary battery according to any one of claims 7 to 9, **characterized in that** a mass percentage of the additive in the electrolyte is 0.01% to 10%, optionally 0.01% to 5%.

11. A battery module, **characterized by** comprising the secondary battery according to any one of claims 1 to 10.

12. A battery pack, **characterized by** comprising the battery module according to claim 11.

13. An electric apparatus, **characterized by** comprising the battery pack according to claim 12.
